# EUROPEAN PATENT SPECIFICATION

(11) **EP 0 589 387 B1**
(45) Date of publication and mention of the grant of the patent: **02.04.1997**
(21) Application number: 93115092.4
(22) Date of filing: 20.09.1993
(51) Int. Cl.: B64G 1/36, G01S 3/786

(54) **Method and system for determining 3-axis spacecraft attitude**
Verfahren und Einrichtung zur Bestimmung der Lage eines Raumfahrzeuges in drei Achsen
Méthode et système pour déterminer l'attitude d'un véhicule spatial par rapport à trois axes

(30) Priority: 21.09.1992 US 947684; 21.09.1992 US 947686
(43) Date of publication of application: 30.03.1994
(73) Proprietor: HONEYWELL INC., Minneapolis Minnesota 55408 (US)
(72) Inventor: Billing-Ross, James A., Glendale, AZ 85308 (US); Pledger, Douglas B., Medford, WI 54451 (US); Fritz, Teresa A., Eagan, MN 55123 (US)
(74) Representative: Herzbach, Dieter, Dipl.-Ing.

(56) References cited:
- FR-A- 2 533 883
- US-A- 3 715 594
- US-A- 4 628 206
- US-A- 4 827 422

## Description

### FIELD OF THE INVENTION

This invention relates to a method and system for spacecraft attitude determination according to the preamble of the independent claims.

### BACKGROUND OF THE INVENTION

Satellites and spacecraft are used widely and can serve a variety of purposes. A satellite may be used for communication purposes between multiple positions on the earth which would not otherwise have a direct means of communication. A satellite or spacecraft may also be used for scientific purposes. The spacecraft may act as a platform for sensors which are either pointed at the earth or out into space.

In order to keep the sensors on a spacecraft pointed in the right direction or antennas pointed to the right place on the earth, an orientation system must be provided. In most cases, a three axis reference system must be used in order to provide the proper orientation. The spacecraft may then be stabilized through a variety of methods such as magnetic torquers, chemical thrusters, moment or reaction wheels, or any combination of three.

The orientation of the spacecraft may be determined by a variety of systems. One system provides an earth horizon sensor which scans the edges of the earth in the visible light range to provide pitch and roll orientation, while a separate sensor, which locates the sun at particular times of the day, provides yaw information. During the periods when the sun measurement is not available, the yaw is estimated. The horizon sensors may not provide accurate information of the pitch and roll because of atmospheric conditions on the earth.

Gyroscopes may be used in conjunction with the horizon sensors to provide yaw information. However, due to mechanical friction and other inefficiencies the gyroscopes must be periodically updated in order to provide accurate information. This may be done through a variety of star sensors and ephemeris information.

Another type of system uses an infrared sensor to scan the earth and locate the centroid. Around the centroid, the pitch and roll of the spacecraft can be determined. The limb of the earth can be scanned in the infrared range, as it provides a stable reference point for finding the centroid. The drawbacks of the infrared sensor are that its weight limits its applicability in many scenarios, its need for a cooling system, and its inability to provide three axis information. In most cases a gyroscope or an additional star must be used to provide yaw information.

From US-A-4 827 422 a system is known which delivers three axis attitude information (roll, pitch, yaw) for a spin-stabilized satellite. This is done by scanning a zone around the earth by an array of detectors which are sensitive to visible and UV light. By scanning a zone on the celestial sphere and from the position of two celestial objects within this zone such as the earth and the sun, and the known time a processing means may calculate the desired roll, pitch and yaw information.

Departing from there, it is the object of the present invention to devise a three axis orientation method and system which is light weight, requires only a single sensor ad relies for most of the time on measuring of the earth's ultraviolet limb.

This object is achieved according to the characterizing features of the independent claims. Further advantageous embodiments of the invention may be taken from the dependent claims.

### SUMMARY OF THE INVENTION

A three axis attitude detection system for a spacecraft in earth's orbit includes an ultraviolet light sensor assembly mounted on the spacecraft normal to the yaw axis. The sensor assembly is coupled to an optical assembly which focuses light from a wide field of view on the array. Included in the field of view of the optical assembly is the entirety of the earth's ultraviolet limb and at least one background star which appears around the edge of the earth's horizon.

A processor determines the rotation around the pitch and roll axis of the spacecraft by first centroiding the earth's limb and then comparing a measured centroid with a reference centroid. Rotation around the yaw axis of the spacecraft is determined either by comparison of a measured location of a terminator crossing of the limb with the predicted location of the terminator crossing from ephemeris information, or, if the terminator is not visible, by comparing the position of background stars with predicted locations of the stars from ephemeris information.

### BRIEF DESCRIPTION OF THE DRAWINGS

- Fig. 1: is cross sectional view of the sensor assembly.
- Fig. 2: is a planform view of the mirror assembly.
- Fig. 3: is a graph of the altitude distribution of ozone
- Fig. 4: is a graph of the absorption cross sections of ozone.
- Fig. 5: is a graph of the limb intensity profile.
- Fig. 6: is a diagrammatical illustration of the measured limb and centroid of the earth in comparison to a reference model
- Fig. 7: is a block diagram of the sensor assembly processing system.

### THE PREFERRED EMBODIMENT OF THE INVENTION

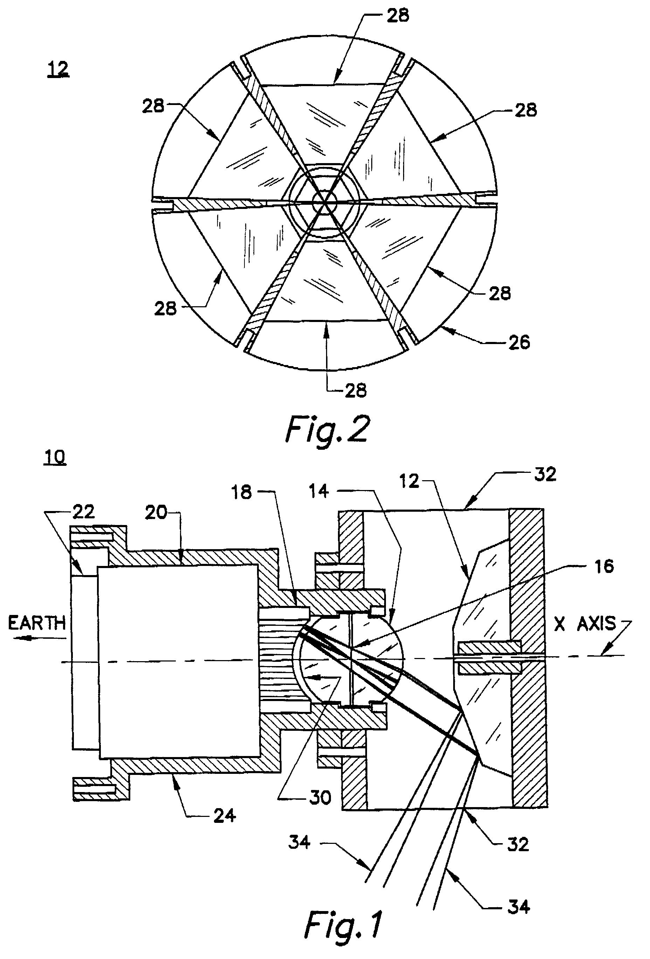

Shown in Fig. 1 is a cut away view of the sensor assembly 10. Included in the assembly 10 is the mirror assembly 12 which is positioned opposite the spherical lens 14. The spherical lens 14 has an aperture stop 16 which controls the amount of light allowed to pass through the lens to the fiber optic field flattener 18. The fiber optic field flattener 18 is shaped so as to match the Petzval curvature of the ball lens. The fiber optic field flattener 18 is positioned adjacent to the spherical lens 14 along its image surface 30. The fiber optic field flattener is connected to the image intensifier 20, which in turn is connected to the mega pixel CCD array 22.

In Fig. 2 a planform view of the mirror assembly 12 is shown. The assembly includes six mirrors 28 laid out in a hexagonal shape. The mirrors 28 are attached to a support structure 26 which is mounted on the sensor housing 24 opposite the ball lens by spokes 32.

As seen in Fig. 1, when the sensor is part of an orbiting satellite, it is aligned so that the mirrors 28 reflect light from the earth into the ball lens. In an optimal situation, the satellite is positioned so that the X-axis points towards the earth, and the sensor housing 24 is between the mirrors 28 and the earth.

The purpose of the sensor assembly 10 is to provide three axis orientation or attitude information for an earth orbiting spacecraft. This information is necessary to provide an attitude correction system so that scientific instruments on the spacecraft may be oriented correctly, or antennas pointed in the proper direction. The present system operates by using a single ultra violet (UV) light sensor to provide all the necessary information.

One method of providing three axis orientation for a spacecraft is to use the earth as a reference to monitor movement about the pitch and roll axis. Remote objects, such as stars, are used to monitor movement around the yaw axis. The first step in this method is to find a reference point. This is done by scanning the earth and determining its centroid. Once the centroid is found, it can be used to detect any movements by the spacecraft around either the pitch or roll axis. Movement around the yaw axis is monitored by tracking the stars which appear around the background of the earth. Ephemeris information can be stored in a computer memory, and predicted locations of the stars can be compared with actual locations in order to determine the proper orientation of the spacecraft around the yaw axis.

Determining the centroid of the earth can be done in a variety of ways. A sensor which detects visible light can scan the entire horizon of the earth and calculate a center of area, or centroid. This method has a high degree of variability due to the fact that weather conditions may obscure the horizon, and clouds may reflect visible light which can obscure the readings. Also, the earth's horizon will not always be visible when the sun passes behind the earth. Another method is to scan for non-visible wavelengths of light, such as UV, which are present high above the earth's surface.

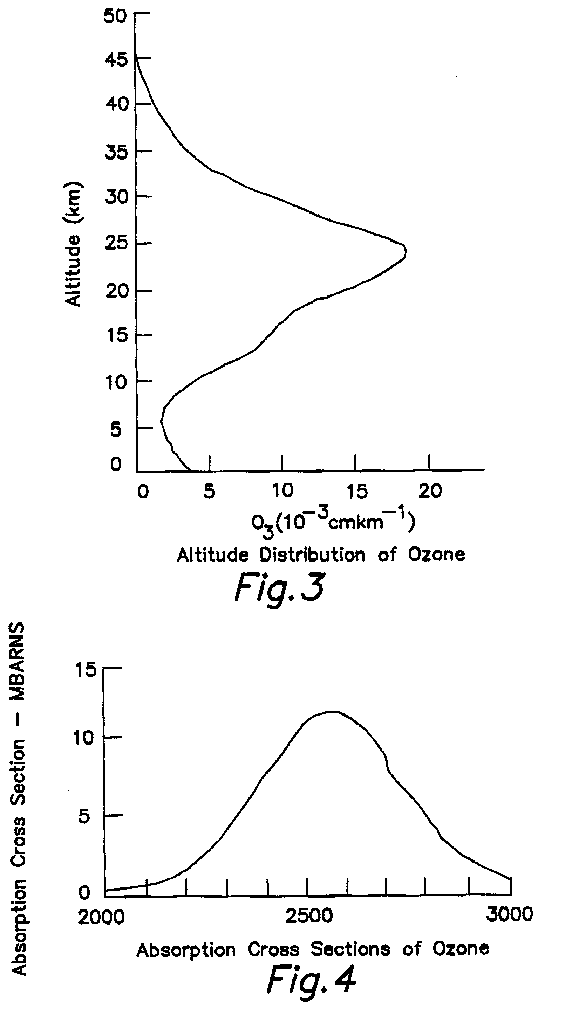

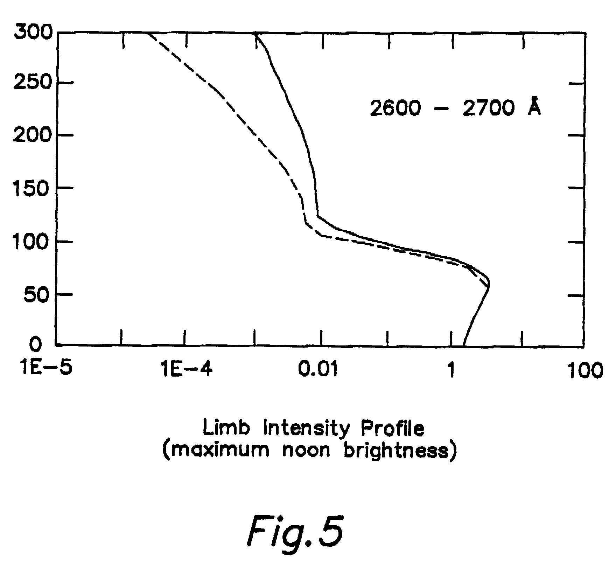

It is well known that ozone acts as a shield for the earth against different types of light such as UV. Ozone shows strong absorption characteristics at wavelengths below 3000 angstroms. UV light which is not absorbed by the ozone layer is scattered back into space. The ozone layer creates a distinct boundary in the earth's atmosphere between where UV light is present and where it is not. The sunlit limb, which occurs when the spacecraft is observing a sunlit earth, is a stable feature because it is formed at altitudes well above terrestrial features, and is consequently not affected by them. This can be seen from the altitude distribution and spectral absorption profiles of ozone as shown in Figs. 3 and 4. Because the intensity profile is determined by Rayleigh scattering it is quite predictable, and depends entirely on the solar radiance and the altitude profiles of atmospheric constituents. The general appearance of the sunlit limb in the wavelength region of interest is seen in Fig. 5.

The night limb radiance, which occurs when the spacecraft and sun are on opposite sides of the earth, derives from emissions of atmospheric gases at higher altitudes, and has also been found to be well defined within the wavelength region of interest.

Sensor readings may be taken by observing the maximum intensity altitude of Rayleigh scattered sunlight during daylight conditions, and of the nightglow at night. These maxima occur at about 55 km and 91 km above hard earth respectively, and little if any variation in altitude has been observed. During the transition from day to night, or vice versa, a methodical progression in the location of the maximum between the two altitudes occurs.

The method herein disclosed is used in the Earth Reference Attitude Determination System (ERADS). ERADS determines roll, pitch, and yaw through observation of a number of terrestrial features and certain stars in a narrow band of the ultraviolet. Pitch and roll are derived from observing the maximum intensity altitude of Rayleigh scattered sunlight during daylight conditions, and of the nightglow at night. For this system to work, the entire earth limb is viewed, and the earth centroid determined from a mean center of the maximum intensity point at all azimuths. Because the entire earth is within the field of view, no alignment is necessary, and highly elliptic orbits can be accommodated with no adjustment. Any movement of a measured centroid from a reference centroid is translated into a pitch or roll rotation of the spacecraft.

Yaw can be determined by at least two methods. In the first method, yaw is determined from the location of one or more of a small catalog of stars with a significant ultraviolet output. Stars of the solar type or hotter of visible magnitude 4.5 or brighter can be seen by the ERADS sensor. This group includes at least 400 examples. The ERADS sensor views about 4% of the entire sky at one time, so the mean number of stars available at any time is 16. In all possible configurations, at least one star will be in the field of view.

In a second method, yaw can be determined from the sharp delineation of the day/night terminator in the ultraviolet region of the spectrum. The sunlit part of the earth appears relatively bright due to Rayleigh scattering of solar illumination in the upper regions of the atmosphere. The night side appears much fainter, but can still be observed through airglow, aurora, and upper atmospheric photochemical processes. The terminator, which separates these regions, is a well defined feature and its location on the earth is well known at any moment. It can be used to accurately determine the rotation about the yaw axis. When the terminator is visible, an expected terminator can be calculated by using the time from an epoch, the satellite ephemerals, and the sun ephemerals. This stored data can then be compared to the measured terminator to determine yaw. Due to orbital geometry, the terminator will not be available at all times, so star tracking must be used to provide continuous yaw monitoring.

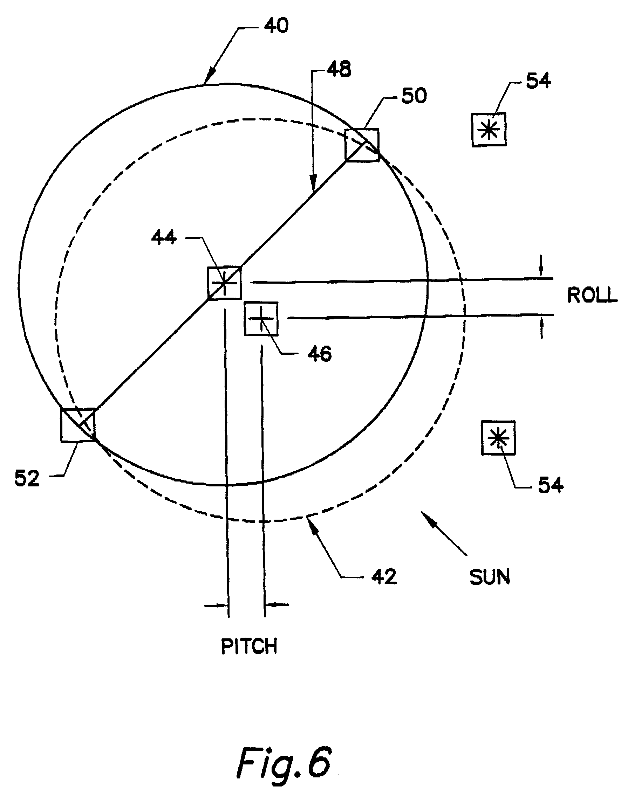

The above described method may be better understood by a study of the diagram in Fig. 6. Shown in the diagram in dashes is the reference limb 42 along with the reference centroid 46. Also shown is the measured limb 40 along with the measured centroid 44. Every time ERADS takes a reading it compares the position of the measured centroid 44 with the position of the reference centroid 46. The distance between the centroids can be translated into rotation of the spacecraft about the pitch or roll axis. Also shown is the measured terminator 48 along with terminator crossing no. 1 50 and terminator crossing no. 2 52. ERADS locates either of the terminator crossings and then compares them with predicted values from ephemeris information. The error between the measured and predicted terminator can be used to determine rotation of the spacecraft about the yaw axis. If the terminator is not available due to the time of day, ERADS may use the background stars 54 to determine yaw.

In operation, the ERADS sensor will view the region from the surface of the earth to 10 degrees above. In order to image these large angles, the combination of the mirror assembly 12, which acts as a reflective field reducer, and a spherical lens 14 is used. This combination can be seen in Fig. 1.

When an image is viewed, the light rays 34 are reflected off the mirrors 28 into the spherical lens 14. Because of the spherical shape of the lens the light is refracted towards the center of the lens. A center aperture stop 16 is used with lens which limits the amount of light which may pass through lens and ultimately improves the image quality. Because of the shape of the lens in relation to the stop, the only third order Seidel aberrations present are spherical aberration and Petzval curvature. Spherical aberration is minimized by using a sapphire lens, which has a very high refractive index. The curvature of the image surface 30 of the spherical lens 14 is matched to the Petzval curvature. This makes the lens more compact and useful over a wide field of view. By using the curved image surface, the beams which pass through the lens are at normal incidence to the image surface, which is favorable for illumination at the high field angles.

The curved surface of the fiber optic field flattener 18 is positioned adjacent to the curved image surface 30. The surface of the field flattener is coated with a medium for conversion of the ultraviolet to visible light for transmission through the fiber bundle. The preferred range of ultravioled light which works best with this system is between 2800 and 3000 angstroms. The image is then transmitted through the image intensifier 20 tube to the mega pixel CCD array 22. The CCD array converts the visible light image into a digitized electrical signal.

If the sensor were viewing the earth's limb without the mirror assembly 12, the total field of view could exceed 150 degrees. At this point the imaging qualities of the ball would be somewhat stressed. Because of the obliquity of the wavefront at the aperture stop 16, the effective aperture at extreme angles would be greatly reduced and there would be higher order aberrations present. Also, the mapping by the field flattener 18 of a nearly hemispherical image surface 30 to a flat one greatly increases the image footprint, especially at the edges of the image. Therefore, the mirror assembly 12 is used to map the extreme field into a more moderate field of view. The drawback of the mirror assembly is that many objects which are located at lower angles of incidence are not visible. Because ERADS only observes the outer edges of the earth this limitation does not hinder the system's overall performance.

Because of the wide field of view, no scanning or alignment of separate sensors will be required. Since the maximum intensity altitude of the limb is defined as the horizon, no absolute calibration is required. As seen Fig. 2, six to eight mirrors 28 are positioned in a hexagonal or octagonal pattern rather than a continuous mirror. A continuous mirror would preserve mapping, but would introduce a great amount of astigmatism, which reduces resolution. The faceted mirrors 28 preserve wavefront quality, but introduce mapping distortion tangential to the limb. There are regions of ambiguity and missing data in the image at each mirror seam due to this mapping distortion. Because of the centroiding nature of the attitude determination and the total number of stars visible, this distortion is not detrimental to overall sensor performance.

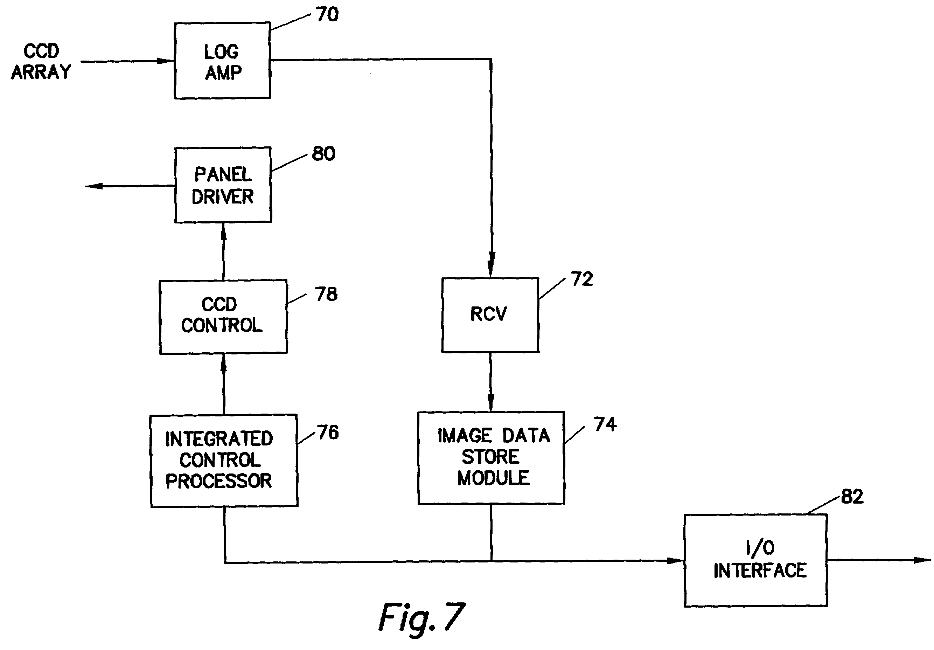

Fig. 7 discloses a block diagram of the information processing system for the ERADS. The processing system is comprised of components contained with the sensor assembly 10 which are electrically connected to the control electronics. The log amp 70 receives the image from the CCD array 22 and transmits it over a high speed data line to the control electronics. The digitized image is transmitted to the receiver 72 and then stored in memory in the Image Data Store Module (IDSM) 74. The IDSM 74 is connected to the Integrated Control Processor (ICP) 76 as well as to an input/output interface 82. This input/output interface 82 can be connected to a variety of functions which require information from the sensor. The ICP 76 is connected to CCD control 78 which in turn is connected to the panel driver. The panel driver 80 controls CCD array 22.

During operation of the sensor assembly 10, the ICP 76 sends a signal through the CCD control 78 for the CCD array 22 to receive an image. The CCD control 78 acts like a shutter control for a camera. The image from the CCD array 22 is then transmitted from the log amp 70 through the receiver 72 to the memory. The ICP 76 is signalled that the digitized image has been received in memory; it retrieves the image from memory and compares it with the stored data consisting of star charts and limb models to determine if the spacecraft is properly orientated. Star configurations are identified by position and magnitude at the time the image was received. The limb image received is compared to an onboard limb models. The ICP compares multiple vector measurements with reference vectors to provide a best estimate of the rotation from the reference frame to the measurement. This information is then output to spacecraft systems which require it. The image frames are processed at a nominal rate of 2 Hz, although this rate may be varied.

## Claims

1. A method of determining three axis attitude information for a spacecraft in earth's orbit using a single ultraviolet light sensor assembly, and comprising the steps of:
a) positioning the ultraviolet light sensor asembly of the spacecraft so as to view the entirety of the earth's ultraviolet limb and at least one background star;
b) whereat said ultraviolet limb can be a sunlit limb provided by Rayleigh scattered sunlight during daylight conditions or can be a night limb provided by the night glow at night;
c) establishing a reference centroid of the earth's ultraviolet limb using an image of the limb detected by the ultraviolet light sensor assembly;
d) determining rotation of the spacecraft about the pitch and roll axis of the spacecraft by monitoring the location of a measured centroid of the earth's ultraviolet limb in relation to the location of the reference centroid;
e) detecting an ultraviolet image of at least one of the background star; and
f) determining the rotation of the spacecraft about the yaw axis;
f1) if a terminator is visible by comparison of a measured location of a terminator crossing of the limb with the predicted location of the terminator crossing from ephemeris information; or
f2) if the terminator is not available due to the time of day by monitoring the position of the ultraviolet image of the background stars in relation to the predicted locations of the background stars from ephemeris information.

2. Method according to Claim 1, **characterized in that** the steps of determining the location of the reference and measured centroids are accomplished by locating the mean center of points of maximum intensity at all azimuths of the limb.

3. Method according to Claim 1, **characterized in that** the step of determining the spacecraft rotation about the pitch and roll axis is accomplished by overlaying images of the measured centroids and the reference centroid in a reference plane and measuring the longitudinal and lateral distances between the measured and reference centroids.

4. Method according to Claim 1, **characterized in that** the step of determining the spacecraft rotation about the yaw axis is accomplished by overlaying the ultaviolet image of the background stars with an image of the predicted positions of said background in a reference plane and measuring the lateral and longitudinal distance between the ultraviolet image and the predicted position.

5. Method according to Claim 1, **characterized in that** the step of determining the spacecraft rotation about the yaw axis is accomplished by overlaying an image of the measured position of the terminator crossing with the predicted positions of the terminator crossing in a reference plane and measuring the lateral and longitudinal distance between the ultraviolet image and the predicted position.

6. Sensor assembly (10) for implementing the method according to claim 1 in determining three axis attitude information for a spacecraft in earth's orbit, comprising:
a) a single ultraviolet light sensor (18) mounted on the spacecraft;
b) a optical assembly (12,14) coupled to said ultraviolet light sensor for focussing light from a wide field of view on said ultraviolet light sensor, wherein the wide field of view includes the entirety of the earth's ultraviolet limb and at least one background star; and
c) a processing means (20,22;70 - 80) coupled to said ultraviolet light sensor for determining rotation of the spacecraft around the pitch and roll axis of the spacecraft through ultraviolet imaging of the earth's limb ad rotation about the jaw axis of the spacecraft through a comparison of the actual location of the background stars with the predicted locations from ephemeral data or through a comparison of the actual location of the terminator crossing on the earth's limb with the predicted location of the terminator crossing from ephemeral data.

7. Assembly according to claim 6, **characterized in that** the optical assembly comprises:
a spherical lens (14); and
a mirror assembly (12) to reflect light from the field of view into the spherical lens in a manner which reduces the effective field of view.

8. Assembly according to claim 7, **characterized in that** the spherical lens (14) has a stop and an aperture (16) to control the amount of light which passes through the spherical lens.

9. Assembly according to claim 8, **characterized in that** the spherical lens (14) is constructed of sapphire.

10. Assembly according to one of claims 7 to 9, **characterized in that** the ultraviolet light sensor comprises:
a fiber optic field flattener (18) adjacent to the spherical lens (14) with a medium between the lens and the fiber optic field flattener to convert UV light to visible light;
an image intensifier (20) connected to the fiber optic field flattener; and
a CCD array (22) connected to the image intensifier to convert the visible light into a digitized electric signal.

## Patentansprüche

1. Verfahren zur Bestimmung der Lageinformation in drei Achsen für ein Raumfahrzeug in einer Erdumlaufbahn unter Verwendung einer einzigen UV-Licht-Sensoranordnung, umfassend die Schritte:
a) Positionierung der UV-Licht-Sensoranordnung des Raumfahrzeuges so, daß sie die Gesamtheit des ultravioletten Randes der Erde und wenigstens einen Hintergrundstern betrachtet;
b) wobei der ultraviolette Rand ein Hellphasenrand sein kann, der durch Rayleigh-Streuung des Sonnenlichts während des Tageslichtzustandes vorgegeben ist oder ein Nachtrand sein kann, der durch das Nachtglühen bei Nacht vorgegeben ist;
c) Bildung eines Referenz-Massenschwerpunktes des ultravioletten Randes der Erde unter Verwendung eines Bildes des Randes, der durch die UV-Licht-Sensoranordnung detektiert wird;
d) Feststellung der Drehung des Raumfahrzeuges um die Nick- und Rollachse des Raumfahrzeuges durch Überwachung des Ortes eines gemessenen Massenschwerpunktes des ultravioletten Randes der Erde in Bezug auf den Ort des Referenz-Massenschwerpunktes;
e) Detektieren eines ultravioletten Bildes von wenigstens einem Hintergrundstern; und
f) Bestimmung der Drehung des Raumfahrzeuges um die Gierachse;
f1) wenn eine Lichtgrenze sichtbar ist durch Vergleich eines gemessenen Ortes einer Lichtgrenzenkreuzung des Randes mit dem vorhergesagten Ort der Lichtgrenzenkreuzung aus Ephemerideninformation; oder
f2) wenn die Lichtgrenze auf Grund der Tageszeit nicht verfügbar ist durch Überwachung der Position des ultravioletten Bildes der Hintergrundsterne in Bezug auf die vorhergesagten Orte der Hintergrundsterne aus Ephemerideninformation.

2. Verfahren nach Anspruch 1, **dadurch gekennzeichnet,** daß die Schritte der Feststellung des Ortes des Referenz- und gemessenen Massenschwerpunktes verwirklicht werden durch Lokalisieren des mittleren Zentrums von Punkten maximaler Intensität bei jedem Azimuth des Randes.

3. Verfahren nach Anspruch 1, **dadurch gekennzeichnet,** daß der Schritt der Feststellung der Drehung des Raumfahrzeuges um die Nick- und Rollachse verwirklicht wird durch Überlagerung von Bildern des gemessenen Massenschwerpunktes und des Referenz-Massenschwerpunktes in einer Refererzebene und durch Messung der Längs- und Seitenabstände zwischen den gemessenen und Referenz-Massenschwerpunkten.

4. Verfahren nach Anspruch 1, **dadurch gekennzeichnet,** daß der Schritt der Feststellung der Drehung des Raumfahrzeuges um die Gierachse verwirklicht wird durch Überlagerung des ultravioletten Bildes der Hintergrundsterne mit einem Bild der vorhergesagten Positionen des Hintergrundes in einer Referenzebene und durch Messung des Seiten- und Längsabstandes zwischen dem ultravioletten Bild und der vorhergesagten Position.

5. Verfahren nach Anspruch 1, **dadurch gekennzeichnet,** daß der Schritt der Feststellung der Drehung des Raumfahrzeuges um die Nickachse verwirklicht wird durch Überlagerung eines Bildes der gemessenen Position der Lichtgrerzenkreuzung mit den vorhergesagten Positionen der Lichtgrenzenkreuzung in einer Referenzebene und durch Messung des Seiten- und Längsabstandes zwischen dem ultravioletten Bild und der vorhergesagten Position.

6. Sensoranordnung (10) zur Verwirklichung des Verfahrens gemäß Patentanspruch 1 bei der Bestimmung der Lageinformation in drei Achsen für ein Raumfahrzeug in einer Erdumlaufbahn, aufweisend:
a) einen einzigen UV-Lichtsensor (18), der auf dem Raumfahrzeug angeordnet ist;
b) eine optische Anordnung (12,14), die mit dem UV-Lichtsensor gekoppelt ist, um Licht aus einem weiten Gesichtsfeld auf dem UV-Lichtsensor zu fokussieren, wobei das weite Gesichtsfeld die Gesamtheit des ultravioletten Randes der Erde und wenigstens einen Hintergrundstem umfaßt; und
c) eine an den UV-Lichtsensor angeschlossene Verarbeitungseinrichtung (20,22;70-80) zur Feststellung der Drehung des Raumfahrzeuges um die Nick- und Rollachse des Raumfahrzeuges durch ultraviolette Abbildung des Erdrandes und der Drehung um die Gierachse des Raumfahrzeuges durch einen Vergleich des tatsächlichen Ortes der Hintergrundsterne mit den vorhergesagten Orten aus Ephemeridendaten oder durch einen Vergleich des tatsächlichen Ortes der Lichtgrenzenkreuzung auf dem Erdrand mit dem vorhergesagten Ort der Lichtgrenzenkreuzung aus Ephemeridendaten.

7. Anordnung nach Anspruch 6, **dadurch gekennzeichnet,** daß die optische Anordnung umfaßt:
eine sphärische Linse (14); und
eine Spiegelanordnung (12), um Licht aus dem weiten Gesichtsfeld in die sphärische Linse in einer Weise zu reflektieren, die das effektive Gesichtsfeld vermindert.

8. Anordnung nach Anspruch 7, **dadurch gekennzeichnet,** daß die sphärische Linse (14) einen Anschlag und eine Blende (16) besitzt, um den Betrag an Licht zu steuern, der durch die sphärische Linse verläuft.

9. Anordnung nach Anspruch 8, **dadurch gekennzeichnet,** daß die sphärische Linse (14) aus Saphir aufgebaut ist.

10. Anordnung nach einem der Ansprüche 7 bis 9, **dadurch gekennzeichnet,** daß der UV-Lichtsensor umfaßt:
einen faseroptischen Bildglätter (18) in Nachbarschaft zu der sphärischen Linse (14) mit einem Medium zwischen der Linse und dem faseroptischen Bildglätter, um UV-Licht in sichtbares Licht umzuwandeln;
einen Bildverstärker (20), der an den faseroptischen Bildglätter angeschlossen ist; und
eine CCD-Anordnung (22), die an den Bildverstärker angeschlossen ist, um das sichtbare Licht in ein digitalisiertes elektrisches Signal umzuwandeln.

## Revendications

1. Procédé de détermination de l' information d'attitude sur trois axes pour un engin spatial en orbite terrestre en utilisant un unique ensemble de capteur de lumière ultraviolette, et comportant les étapes consistant à :
a) positionner l'ensemble de capteur de lumière ultraviolette de l'engin spatial de façon à voir la totalité du limbe ultraviolet de la Terre et au moins une étoile d'arrière-plan;
b) ledit limbe ultraviolet pouvant être un limbe pendant la phase éclairée procuré par la lumière du soleil subissant une diffusion de Rayleigh dans des conditions de lumière du jour ou pouvant être un limbe de nuit procuré par la luminescence nocturne la nuit;
c) établir un centre de référence du limbe ultraviolet de la Terre en utilisant une image du limbe, détecté par l'ensemble de capteur de lumière ultraviolette;
d) déterminer la rotation de l'engin spatial autour de l'axe de tangage et de roulis de l'engin spatial en contrôlant l'emplacement d'un centre mesuré du limbe ultraviolet de la Terre par rapport à l'emplacement du centre de référence;
e) détecter une image ultraviolette d'au moins une des étoiles d'arrière-plan; et
f) déterminer la rotation de l'engin spatial autour de l'axe de lacet;
f1) si un terminateur est visible, par comparaison d'un emplacement mesuré d'un croisement de terminateur du limbe avec l'emplacement prévu du croisement de terminateur à partir d'une information éphémère; ou
f2) si le terminateur n'est pas disponible du fait du moment de la journée, en contrôlant la position de l'image ultraviolette des étoiles d'arrière-plan par rapport aux emplacements prédits des étoiles d'arrière-plan à partir de l'information éphémère.

2. Procédé selon la revendication 1, caractérisé en ce que les étapes de détermination de l'emplacement des centres de référence et mesurés sont réalisées en localisant le centre moyen des points d'intensité maximum dans tous les azimuts du limbe.

3. Procédé selon la revendication 1, caractérisé en ce que l'étape de détermination de la rotation d'engin spatial autour de l'axe de tangage et de roulis est réalisée en superposant des images des centres mesurés et du centre de référence dans un plan de référence et en mesurant les distances longitudinales et latérales entre les centres mesurés et de référence.

4. Procédé selon la revendication 1, caractérisé en ce que l'étape de détermination de la rotation d'engin spatial autour de l'axe de lacet est réalisée en superposant l'image ultraviolette des étoiles d'arrière-plan avec une image des positions prédites dudit arrière-plan dans un plan de référence et en mesurant la distance latérale et longitudinale entre l'image ultraviolette et la position prédite.

5. Procédé selon la revendication 1, caractérisé en ce que l'étape de détermination de la rotation d'engin spatial autour de l'axe de lacet est réalisée en superposant une image de la position mesurée du croisement de terminateur avec les positions prédites du croisement de terminateur dans un plan de référence et en mesurant la distance latérale et longitudinale entre l'image ultraviolette et la position prédite.

6. Ensemble de capteur (10) destiné à mettre en oeuvre le procédé selon la revendication 1 pour la détermination de l'information d'attitude sur trois axes d'un engin spatial en orbite terrestre, comportant :
a) un unique capteur de lumière ultraviolette (18) monté sur l'engin spatial;
b) un ensemble optique (12, 14) relié audit capteur de lumière ultraviolette afin de focaliser la lumière provenant d'un champ de vision large sur ledit capteur de lumière ultraviolette, le champ de vision large comprenant la totalité du limbe ultraviolet de la Terre et au moins une étoile d'arrière-plan; et
c) des moyens de traitement (20, 22; 70 à 80) reliés audit capteur de lumière ultraviolette afin de déterminer la rotation de l'engin spatial autour de l'axe de tangage et de roulis de l'engin spatial par la formation de l'image ultraviolette du limbe de la Terre, et la rotation autour de l'axe de lacet de l'engin spatial par comparaison de l'emplacement réel des étoiles d'arrièreplan avec les emplacements prédits à partir de données éphémères ou par comparaison de l'emplacement réel du croisement de terminateur du limbe de la Terre avec l'emplacement prédit du croisement de terminateur à partir de données éphémères.

7. Ensemble selon la revendication 6, caractérisé en ce que l'ensemble optique comporte :
une lentille sphérique (14); et
un ensemble de miroir (12) destiné à réfléchir la lumière provenant du champ de vision dans la lentille sphérique d'une manière qui réduit le champ de vision effectif.

8. Ensemble selon la revendication 7, caractérisé en ce que la lentille sphérique (14) a une valeur de diaphragme et une ouverture (16) afin de commander la quantité de lumière qui passe à travers la lentille sphérique.

9. Ensemble selon la revendication 8, caractérisé en ce que la lentille sphérique (14) est construite en saphir.

10. Ensemble selon l'une des revendications 7 à 9, caractérisé en ce que le capteur de lumière ultraviolette comporte :
un aplatisseur de champ à fibre optique (18) adjacent à la lentille sphérique (14) avec un milieu entre la lentille et l'aplatisseur de champ à fibre optique afin de convertir la lumière ultraviolette en une lumière visible;
un intensificateur d'image (20) relié à aplatisseur de champ à fibre optique; et
une rangée CCD (22) reliée à l'intensificateur d'image afin de convertir la lumière visible en un signal électrique numérisé.
